Europäisches Patentamt

European Patent Office

Office européen des brevets

(11) Veröffentlichungsnummer: **0 028 296**
**B1**

(12) **EUROPÄISCHE PATENTSCHRIFT**

(45) Veröffentlichungstag der Patentschrift: **12.11.86**

(51) Int. Cl.⁴: **E 21 B 47/12, G 01 V 11/00**

(21) Anmeldenummer: **80104931.3**

(22) Anmeldetag: **20.08.80**

(54) **Anordnung zur Energie- und Messwertübertragung von einer Zentralstation auf mehrere Messstellen.**

(30) Priorität: **31.10.79 DE 2943979**

(43) Veröffentlichungstag der Anmeldung:
**13.05.81 Patentblatt 81/19**

(45) Bekanntmachung des Hinweises auf die
Patenterteilung:
**12.11.86 Patentblatt 86/46**

(84) Benannte Vertragsstaaten:
**FR GB IT NL**

(56) Entgegenhaltungen:
**FR-A-2 269 249**
**US-A-2 452 901**
**US-A-3 402 391**
**US-A-3 492 481**

(73) Patentinhaber: **Licentia Patent-Verwaltungs-
GmbH
Theodor-Stern-Kai 1
D-6000 Frankfurt/Main 70 (DE)**

(72) Erfinder: **Kranert, Klaus, Dr.-Ing.
Wittenbergener Weg 9
D-2000 Hamburg 56 (DE)**
Erfinder: **Schröder, Michael, Ing.grad.
Schulweg 10
D-2086 Ellerau (DE)**

(74) Vertreter: **Sass, Adolph, Dipl.-Ing.
Licentia Patent-Verwaltungs-GmbH Theodor-
Stern-Kai 1
D-6000 Frankfurt 70 (DE)**

Courier Press, Leamington Spa, England.

## Beschreibung

Die Erfindung befaßt sich mit einer Anordnung gemäß den Merkmalen des Oberbegriffs des Anspruches 1.

Bei Wasserfahrzeugen, z.B. Bohrplattformen, insbesondere solchen, die für Tiefbohrungen verwendet werden und mittels Ankerseilen und Ankerwinden über der Bohrposition gehalten werden, ist es bekannt, daß die Position des Wasserfahrzeuges von dem Bohrloch nur in bestimmten engen Grenzen abweichen darf. Werden diese Grenzen überschritten, wird das Standrohr (Riser), in dem das Bohrgestänge geführt ist, unzulässig hoch beansprucht. Bei Beschädigung der Bohreinrichtung sind umfangreiche Austauscharbeiten auszuführen, abgesehen von den wirtschaftlichen Verlusten.

Um die Lage des Standrohres jederzeit kontrollieren und entsprechende Befehle an Antriebseinrichtungen und Winden geben zu können, um Abweichungen des Fahrzeuges aus einer Sollage auszuregeln, sind über die Länge des Standrohres verteilt Neigungswinkelmeßeinrichtungen angeordnet. Diese von einer Zentralstation auf dem Wasserfahrzeug ständig nacheinander abgefragten Einrichtungen geben in ihrer Gesamtheit jederzeit ein genaues Bild über die Lage des Standrohres (DE—B 25 02 020).

Derartige Anlagen sind üblicherweise so ausgelegt, daß Kabek von den einzelnen Meßstellen zu einer Zentralstation führen, in der die gemeinsame Energieversorgung für alle Meßstellen untergebracht ist und in der die Signale aller Meßstellen ausgewertet werden. Es sind auch Anordnungen bekannt, bei denen zur Ersparnis der Verkabelungskosten die Energieversorgung über ein einziges Kabel erfolgt, an welches die Meßstellen einzeln angeschlossen sind.

Für Anlagen, die in einer sehr ungünstigen Umgebung, z.B. unter Wasser, eingesetzt werden, bringen die elektrischen Verbindungen, die an jeder einzelnen Meßstelle erforderlich sind, eine erhebliche Verringerung der Betriebssicherheit mit sich.

In der US—A—3 492 481 ist eine Anordnung und ein Verfahren beschrieben, bei welchem eine Sonde mit einem Neutronengenerator in ein Bohrloch abgesenkt wird und von einer Station an der Oberfläche mit elektrischer Energie verschiedener Frequenzen versorgt wird. Je nach dem Schaltzustand diverser Relais wird die Neutronenquelle entweder schnelle Neutronen an das benachbarte Erdreich abgeben oder die Sonde Rückstrahlung aufnehmen und über ein Einleiterkabel an die Oberflächenstation melden. Hier wird mit unterschiedlichen Frequenzen für die Energieversorgung und Steuerung gearbeitet.

Die FR—A—2 269 249 befaßt sich mit einem System zum Senden und Empfangen von kodierten Signalen über bifilare Leitungen und beschreibt insbesondere die Leitungsführung im Bereich eines Durchsteckwandlers. Durchsteckwandler sind somit an sich bekannt.

In der US—A—3 402 391 wird eine Anordnung zur Bohrlochuntersuchung mit einer Kamera und Übertragung der Ergebnisse auf eine Station an der Erdoberfläche angegeben. Auch ist eine Möglichkeit zur Aufladung einer Batterie in der Bohrlochsonde erwähnt für den Fall, daß die Batteriespannung unter vorgegebene Werte absinkt. Die Aufladung von Energiespeichern in seiner Mehrzahl von Meldstellen entlang einer ausgedehnten Unterwasserstruktur, die in den Pausen zwischen den Meldungen der einzelnen Meßstellen erfolgt, ist der Entgegenhaltung allerdings nicht zu entnehmen.

Schließlich ist aus der US—A—2 452 901 eine induktive Übertragungsanordnung bekannt, bei der ein kreisförmige Kern nach Einbringen einer Wicklung mit einem Verschlußstück aus demselben Kernmaterial geschlossen wird.

Die der Erfindung zugrundeliegende Aufgabe für eine Anordnung gemäß dem Oberbegriff des Hauptanspruches ist darin zu sehen, daß eine Anordnung verwendet wird, die für eine Vielzahl von Meßstellen unter erschwerten Umweltbedingungen eine kontaktlose Energie- und Meßwertübertragung auf eine Zentralstation gestattet, dabei einfach zu handhaben ist und eine große Informationsmenge verarbeiten kann.

Diese Aufgabe wird erfindungsgemäß durch die im Kennzeichen des Hauptanspruches angegebenen Merkmale gelöst. Weiterbildungen der Erfindung sind in den Unteransprüchen gekennzeichnet.

Der wesentliche Vorteil einer Anordnung nach der Erfindung besteht darin, daß ein einfacher Aufbau der Meßstellen über die Durchsteckwandler möglich und die Anordnung bis zu größten Wassertiefen verwendbar ist.

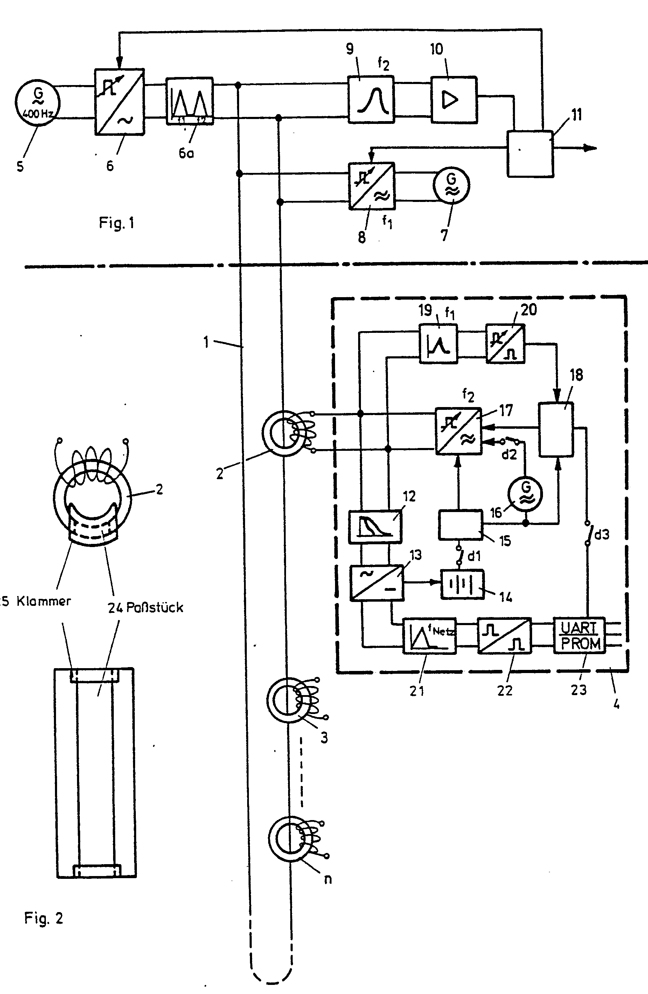

In der Zeichnung ist ein Ausführungsbeispiel nach der Erfindung schematisch dargestellt. Gemäß Figur 1 sind an eine Kabelschleife 1, die parallel zu einem nicht dargestellten Standrohr verläuft, über Durchsteckwandler 2, 3 . . . n Meßstellen 4 angeschlossen. Das Kabel ist längs- und querwasserdicht und hat einen so kleinen ohmschen Widerstand, daß es für die verwendeten Frequenzen praktisch verlustlos ist. Diese Meßstellen sind über die Länge der Kabelschleife verteilt angeordnet. Es kann zweckmässig sein, Meßstellen in bestimmten Bereichen des Standrohres mit kleineren gegenseitigen Abständen vorzusehen, um Abweichungen des Standrohres aus seiner Sollage genauer zu erfassen.

Ein Generator 5 liefert einen konstanten Strom mit fester Netzfrequenz und versorgt über einen Wechselstromschalter 6 mit Thyristoren die Kabelschleife 1 und damit die Meßstellen 4 mit der erforderlichen Energie. Dem Wechselstromschalter, der zur Erzeugung der Impulstelegramme dient, über die die Meßstellen ein- und ausgeschaltet werden, sind zwei Sperrkreise 6a in Reihe nachgeschaltet. Diese verhindern, daß störende Oberwellen, die durch Generator und Wechselstromschalter hervorgerufen werden, in die Kabelschleife gelangen. Von der Zentralstation oberhalb der strichpunktierten Linie können die Meßstellen 4 ein- und ausgeschaltet werden. Die Schaltbefehle werden über Serientelegramme an die Meßstellen gegeben. Als Datenträger dient die Versorgungsspannung. Ein Frequenzgenerator 7 und ein Modulator 8 sind vorgesehen zur Abgabe impulscodierter Signale bei einer Trägerfrequenz $f_1$, um die einzelnen Meßstellen 4 zur Abgabe der Meßwerte aufzurufen. Diese Meldung von den Meßstellen 4 zur Zentralstation wird durch Impulstelegramme mit einer Trägerfrequenz $f_2$ gesendet. Die Impulstelegramme mit der Frequenz $f_1$ werden über einen Übertrager in die Kabelschleife eingekoppelt. In die Hochspannungsseite (Kabelseite) des Übertragers und zur Auskopplung der Netzfrequenz ist ein Kondensator geschaltet. Er wird so dimensioniert, daß die Trägerfrequenz $f_2$ nicht beeinträchtigt wird. Die Impulstelegramme $f_2$ werden in einer Filterstufe 9 in Binärsignale umgewandelt und über einen Verstärker 10 an einen Rechner 11 gegeben. Der Rechner 11 gibt die Meßwerte aus, die zur Korrektur des Istposition des Fahrzeuges über die Antriebe erforderlich sind. Die in der Filterstufe 9 verstärken $f_2$-Signale werden gleichgerichtet und geglättet. Damit werden Binärsignale aus den Impulstelegrammen gewonnen. Da die Binärsignale durch die Filterstufe 9 stark verzerrt sein können, werden sie auf eine Triggerstufe gegeben, deren Referenzspannung in einem Problaufauf der Meßanordnung für jede Meßstelle ermittelt wird.

Der Durchsteckwandler 2 ist so dimensioniert, daß seine Betriebspermeabilität oberhalb der optimalen Permeabilität liegt. Die Sättigungsinduktion wird dabei nicht erreicht. Da sich im Sendebetrieb der Lastwiderstand verkleinert, werden sich der Strom und die Feldstärke vergrößern. Die sich dann einstellende Permeabilität liegt etwas unterhalb der optimalen Permeabilität. Unter diesen Voraussetzungen kann für die Netzspannung eine Leistungsanpassung erreicht werden, die im Sendebetrieb nicht gestört wird. An die Wicklung des Durchsteckwandlers 2 ist zur Sromversorgung der Meßstelle 4 ein Tiefpass 12, ein Netzgerät 13 sowie ein Akkumulator 14 vorgesehen. Ein Spannungswandler 15 versorgt einen Frequenzgenerator 16 ($f_2$), einen Modulator 17, ein Meßwerterfassungsglied 18 und einen Empfänger 20 mit den notwendigen Spannungen. Der Tiefpaß 12 verhindert, daß die Trägerfrequenzen $f_1$ und $f_2$ sich über dem Netzgerät 13 kurzschließen. Zugleich enthält er einen Sperrkreis für die Schaltfrequenzen des Spannungswandlers 15. Das Neztgeräts 13 enthält einen Gleichrichter und einen Parallelregler am Spannungsausgang, der ein Überladen des Akkumulators verhindert.

Im Glied 18 sind Einrichtungen zum Entschlüsseln der Adreßsignale, ein Multiplexer zum Auslesen von Meßwertgebern und ein Wandler enthalten, der die Meßwertinformationen in ein Serientelegramm umsetzt. Dieses Serientelegramm wirkt auf einen Modulator 17, der seine Ausgangsspannung in den Durchsteckwandler 2 einkoppelt.

Die von der Zentralstation gesendeten Adreßsignale werden über den Wandler 2 auf das Filter 19 und den Empfänger 20 gegeben.

An das Netzgerät 13 in der Meßstelle sind ferner eine Filterstufe 21 für die Netzfrequenz, ein Empfänger 22 sowie ein Block 23 angeschlossen, in dem eine Serien-/Parallelwandlung UART und ein PROM enthalten sind. Die Ausgangssignale $d_1$, $d_2$ und $d_3$ veranlassen bei bestimmten Eingangssignalen Schalthandlungen, wie sie durch die Schaltstellen $d_1$—$d_3$ angedeutet sind. Jede einzelne Meßstelle weist ein eigenes PROM auf.

Die Wirkungsweise der Anordnung ist folgende:

Die aus dem Generator 5 mit Energie versorgte Kabelleitung 1 ist hinter dem letzten Durchsteckwandler n üER DAS Seewasser und die Metallstruktur wieder mit dem Generator verbungen. Die Rückleitung kann aber auch die Kabelleitung 1 sein, die dann außen an den Durchsteckwandlern entlang zum Generator zurückführt. Die einzelnen Meßstellen 4 werden mit Hilfe von Mittelfrequenz-Impulstelegrammen $f_1$ zur Abgabe ihrer Meßwerte aufgerufen. Die Adreßsignale werden in der Zentralstation erzeugt und mit Hilfe des Generators 7 und des Modulators 8 auf die Kabelleitung 1 gegeben. Dort wird mit der gesendeten Adresse eine der Meßstellen 4 über den jeweiligen Durchsteckwandler angesprochen. Alle anderen Meßstellen bleiben passiv. Die aufgerufene Meßstelle antwortet mit einem Serientelegramm, das die Meßwerte enthält. Die für das Antworttelegramm notwendige Energie wird aus dem Akkumulator 14 bezogen. Dieser wird in den Sendepausen wieder aufgeladen und hat nur die zum Senden erforderliche Energie bereitzustellen.

Wenn eine der Meßstellen gestört sein sollte, kann diese Störung durch das gezielte Ein- und Ausschalten erkannt und die gestörte Meßstelle von dem Datenkanal getrennt werden. Diese Ein- und Ausschaltung erfolgt über die Information eines Serientelegramms, wobei der Datenträger die Versorgungsspannung ist. Diese Telegramm enthält die Adresse der Meßstelle und die Anweisung, ob der Sender ausgeschaltet, die Meßwerterfassung normiert oder der Akkumulator von der nachfolgenden Elektronik abgeschaltet werden soll.

Das Übertragungskabel ist zweckmässig bifilar auf einer Kabeltrommel in der Zentralstation aufgewickelt, die zur Ausschaltung der Eigeninduktivität zusätzlich eine Kurzschlußwicklung erhält.

Mit Hilfe der Durchsteckwandler kann die Meßstrecke verhältnismässig rasch aufgebaut und Messungen in beliebig tiefem Wasser durchgeführt werden.

Der Aufbau der Meßstrecke kann gemäß Figur 2 dadurch erleichtert werden, daß der Kern des Durchsteckwandlers 2, 3 ... n mit einem Spalt versehen wird, der nach Einführung des Kabels mit einem Paßstück 24 wieder geschlossen wird. Da das Paßstück selbst in großen Wassertiefen kräftemässig nicht beansprucht wird, reicht es aus, das Paßstück 24 durch eine federnde Klammer 25 in seiner Lage zu sichern.

Die Erfindung ist nicht auf die Anwendung in Bohranlagen beschränkt, bei denen von einer dynamisch positionierten Bohrplattform Bohrung in tiefem Wasser niedergebracht werden. Ebenso ist sie mit Vorteil einsetzbar bei der Überwachung von Förderrohren für den Meeresbergbau. Ganz allgemein können langgestreckte Strukturen zwischen einem an der Wasseroberfläche befindlichen Fahrzeug und dem Meeresboden mit Hilfe des Anmeldungsgegenstandes auf die Einhaltung zulässiger Beanspruchungen überwacht werden.

## Patentansprüche

1. Anordnung zur Übertragung von Meßwerten von mehreren entlang einer langgestreckten Unterwasserstruktur hintereinander geschalteten Meßstellen (4) auf eine Zentralstation, wobei ein Einaderkabel (1) von der Zentralstation zu den Meßstellen (4) verläuft, an das die Meßstellen (4) angeschlossen sind, und welches sowohl zur Energieversorgung der Meßstellen (4) als auch der Meßwertübertragung dient, und zur Rückführung des Stromes nach dem letzten Durchsteckwandler (n) die Masse der Struktur oder das Seewasser herangezogen wird, dadurch gekennzeichnet, daß ein Niederfrequenzgenerator (5) in der Zentralstation über das Kabel (1) und über Durchsteckwandler (2 . . . n) die Meßstellen (4) in ihren Sendepausen mit elektrischer Energie versorgt, die in den Meßstellen (4) in Einrichtungen (14) gespeichert wird, und daß ein Frequenzgenerator (7) in der Zentralstation über einen Modulator (8) die einzelnen Meßstellen (4) mit pulscodierten Mittelfrequenzsignalen der Frequenz ($f_1$) abfragt, eine gestörte Meßstelle erkennt, aktiviert oder abschaltet, während die Meßwertübertragung zur Zentralstation über dieselben Durchsteckwandler (2 . . . n) mittels pulscodierter Mittelfrequenzsignale der Frequenz ($f_2$) erfolgt.

2. Anordnung nach Anspruch 1, dadurch gekennzeichnet, daß in dem Wechselstromteil des Schalters (6) Sperrkreise (6a) vorgesehen sind für beide Trägerfrequenzen $f_1$ und $f_2$.

3. Anordnung nach Anspruch 1, dadurch gekennzeichnet, daß der Betriebspunkt des Wandlers (17) so gewählt ist, daß bei Einschaltung die Sendeleistung der Meßstelle optimiert ist.

4. Anordnung nach Anspruch 1, dadurch gekennzeichnet, daß die Versorgungsspannung durch ein Regeleinrichtung so eingestellt ist, daß der Strom im Kabel konstant ist.

5. Anordnung nach Anspruch 1, dadurch gekennzeichnet, daß die Meßstellen (4) nacheinander von der Zentralstation zur Signalabgabe aufgerufen werden.

6. Anordnung nach Anspruch 1, dadurch gekennzeichnet, daß in einem Testlauf die Triggerspannung (Offsetspannung) für jede Meßstelle (4) ermittelt wird.

7. Anordnung nach Anspruch 1, dadurch gekennzeichnet, daß das Übertragungskabel bifilar auf eine Kabelvorratstrommel aufgewickelt ist.

8. Anordnung nach Anspruch 7, dadurch gekennzeichnet, daß zur Ausschaltung der Eigeninduktivität zusätzlich eine Kurzschlußwicklung auf der Kabeltrommel vorgesehen ist.

9. Anordnung nach Anspruch 1, dadurch gekennzeichnet, daß der Durchsteckwandler derart modifiziert ist, daß der Wandlerkern einen Spalt aufweist, der durch ein Paßstück (24) wieder verschlossen ist.

10. Anordnung nach Anspruch 11, dadurch gekennzeichnet, daß das Paßstück (24) mittels einer federnden Klammer (25) in seiner Lage gesichert ist.

## Revendications

1. Dispositif de transmission de valeurs mesurées de plusieurs points de mesure (4), branchés successivement le long d'une grande structure sous-marine, à un poste central, avec un câble unifilaire (1) reliant le poste central aux points de mesure (4) et assurant à la fois l'alimentation en énergie des points de mesure (4) et la transmission des valeurs mesurées, la masse de la structure ou l'eau de mer servant au retour du courant après le dernier transformateur de transversée (n), ledit dispositif étant caractérisé en ce qu'un générateur basse fréquence (5) du poste central alimente par l'intermédiaire du câble (1) et de transformateurs de traversée (2 . . . n) les points de mesure (4), pendant leurs intervalles entre émissions, en énergie électrique qui est stockée dans des dispositifs (14) des points de mesure (4); et un générateur de fréquence (7) du poste central interroge les divers points de mesure (4) par des signaux à moyenne fréquence ($f_1$) codés par impulsions, à l'aide d'un modulateur (8), décèle, active ou coupe un point de mesure perturbé, tandis que la transmission des mesures au poste central s'effectue par les mêmes transformateurs de traversée (2 . . . n), à l'aide de signaux à moyenne fréquence ($f_2$) codés par impulsions.

2. Dispositif selon revendication 1, caractérisé par des circuits bouchons (6a) prévus pour les deux fréquences porteuses $f_1$ et $f_2$ dans la partie à courant alternatif de l'interrupteur (6).

3. Dispositif selon revendication 1, caractérisé en ce que le point de fonctionnement du transformateur (17) est choisi de façon à optimiser la puissance d'émission du point de mesure lors de sa mise sous tension.

4. Dispositif selon revendication 1, caractérisé en ce que la tension d'alimentation est ajustée par un dispositif de régulation de façon que le courant dans le câble soit constant.

5. Dispositif selon revendication 1, caractérisé en ce que le poste central appelle successivement les points de mesure (4) à émettre des signaux.

6. Dispositif selon revendication 1, caractérisé en ce que le tension de déclenchement (tension de dérive) de chaque point de mesure (4) est déterminée au cours d'un essai de fonctionnement.

7. Dispositif selon revendication 1, caractérisé en ce que le câble de transmission est enroulé en bifilaire sur un touret.

8. Dispositif selon revendication 7, caractérisé en ce que le touret comporte en outre un enroulement de court-circuit pour éliminer l'inductance propre.

9. Dispositif selon revendication 1, caractérisé en ce que le transformateur de traversée est modifié de façon que son noyau présente une fente est refermée par une clavette (24).

10. Dispositif selon revendication 1, caractérisé en ce que la clavette (24) est fixée par une agrafe élastique (25).

**Claims**

1. Arrangement for the transmission of measurement values from several measurement locations (4), which are connected one behind the other along an elongate submarine structure, to a central station, wherein a single-core cable (1) runs from the central station to the measurement locations (4), to which cable the measurement locations (4) are connected and which serves for the energy supply of the measurement locations (4) as well as also for the measurement value transmission, and the mass of the structure or the seawater is drawn upon for the return of the current after the last bushing transformer (h), characterised thereby. that a low-frequency generator (5) in the central station supplies the measurement locations (4) with electrical energy in their transmission pauses by way of the cable (1) and by way of bushing transformers (2 . . . n), which energy is stored in equipments (14) in the measurement locations (4), and that a frequency generator (7) in the central station by way of a modulator (8) interrogates the individual measurement locations (4) by pulse-coded centre-frequency signals of the frequency $(f_1)$,

recognises, activates or switches off a disturbed measurement location, whilst the measurement value transmission to the central station takes place by means of pulse-coded centre-frequency signals of the frequency $(f_2)$ over the same bushing transformers (2 . . . n).

2. Arrangement according to claim 1, characterised thereby, that blocking circuits (6a) for both carrier frequencies $(f_1)$ and $(f_2)$ are provided in the alternating current part of the switch (6).

3. Arrangement according to claim 1, characterised thereby, that the operating point of the converter (17) is so chosen that the transmitter power of the measurement location is optimised at switching-on.

4. Arrangement according to claim 1, characterised thereby, that the supply voltage is so set by a regulating equipment that the current in the cable is constant.

5. Arrangement according to claim 1, characterised thereby, that the measurement locations (4) are called up for signal delivery one after the other by the central station.

6. Arrangement according to claim 1, characterised thereby, that the trigger voltage (offset voltage) for each measurement location (4) is determined in a test run.

7. Arrangement according to claim 1, characterised thereby, that the transmission cable is wound bifilarly onto a cable reserve drum.

8. Arrangement according to claim 7, characterised thereby, that a short-circuit winding is additionally provided on the cable drum for exclusion of the self-inductance.

9. Arrangement according to claim 1, characterised thereby, that the bushing transformer is modified in such a manner that the transformer core displays a gap which is again closed off by a fitting piece (24).

10. Arrangement according to claim 11, characterised thereby, that the fitting piece (24) is secured in its position by means of a resilient clip (25).

0 028 296

Fig. 1

Fig. 2

25 Klammer     24 Paßstück